(19) Europäisches Patentamt
European Patent Office
Office européen des brevets

(11) **EP 2 626 634 B1**

(12) **EUROPÄISCHE PATENTSCHRIFT**

(45) Veröffentlichungstag und Bekanntmachung des Hinweises auf die Patenterteilung:
**09.10.2019 Patentblatt 2019/41**

(51) Int Cl.:
*F23R 3/28* *(2006.01)*    *F23R 3/14* *(2006.01)*

(21) Anmeldenummer: **13000607.5**

(22) Anmeldetag: **06.02.2013**

(54) **Gasturbinenvormischbrenner**

Gas turbine premix burner

Brûleur à prémélange pour turbine à gaz

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.02.2012 DE 102012002664**

(43) Veröffentlichungstag der Anmeldung:
**14.08.2013 Patentblatt 2013/33**

(73) Patentinhaber: **Rolls-Royce Deutschland Ltd & Co KG**
**15827 Blankenfelde-Mahlow (DE)**

(72) Erfinder: **Clemen, Carsten**
**15749 Mittenwalde (DE)**

(74) Vertreter: **Hoefer & Partner Patentanwälte mbB**
**Pilgersheimer Straße 20**
**81543 München (DE)**

(56) Entgegenhaltungen:
EP-A1- 2 503 241          DE-A1-102007 004 394
DE-A1-102009 025 934      DE-A1-102010 019 772
US-A1- 2011 314 825       US-B1- 6 868 676

EP 2 626 634 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung bezieht sich auf einen Gasturbinenvormischbrenner für eine stationäre Gasturbine oder eine Fluggasturbine, wobei der Vormischbrenner sowohl bei einer Ringbrennkammer als auch bei einer einzelnen Brennkammer mit nur einem Vormischbrenner eingesetzt werden kann.

Vormischbrenner sind aus dem Stand der Technik in unterschiedlichsten Ausgestaltungsformen vorbekannt. Sie dienen dazu, einer Brennkammer Luft und Treibstoff zuzuführen. Hierzu weist der Vormischbrenner eine Treibstoffdüse auf, welche mehrere konzentrisch zu einer Brennermittelachse angeordnete ringförmige Luftkanäle aufweist, in welche Treibstoffleitungen münden. In den Luftkanälen sind Drallerzeuger angeordnet, um die austretende Luft-Treibstoff-Strömung zu verdrallen und strömungstechnisch so zu optimieren, dass eine gute und schadstoffarme Verbrennung in der Brennkammer erfolgen kann.

Gemäß dem Stand der Technik sind die Drallerzeuger mit einer Vielzahl von Strömungsleitelementen versehen, die eine Profilierung aufweisen. Dabei ist es nachteilig, dass die Strömungsleitelemente die Luftströmung nicht in optimaler Weise führen und verdrallen, so dass sich Strömungsbehinderungen und/oder unerwünschte Strömungseinflüsse.

Dokument DE102010019772 offenbart einen Vormischbrenner mit Drallelementen.

Der Erfindung liegt die Aufgabe zugrunde, einen Vormischbrenner der eingangs genannten Art zu schaffen, welcher bei einfachem Aufbau und einfacher, kostengünstiger Herstellbarkeit unter Vermeidung der Nachteile des Standes der Technik optimierte Strömungsverhältnisse, insbesondere im Bereich der Strömungsleitelemente eines Drallerzeugers, aufweist.

Erfindungsgemäß wird die Aufgabe durch die Merkmalskombination des Anspruchs 1 gelöst, die Unteransprüche zeigen weitere vorteilhafte Ausgestaltungen der Erfindung. Erfindungsgemäß ist somit vorgesehen, dass zumindest eine radial innere Kanalwandung im Bereich der Strömungsleitelemente mit einer konkaven, ringnutartigen Ausnehmung versehen ist.

Die erfindungsgemäße Lösung schafft somit eine Querschnittserweiterung des Strömungskanals, durch welchen die Luft zu der Brennkammer zugeführt wird. Die Querschnittserweiterung ist erfindungsgemäß so ausgebildet und dimensioniert, dass sie die durch die jeweiligen Profile der Strömungsleitelemente hervorgerufene Querschnittsverringerung oder Querschnittsveränderung des Kanalquerschnitts kompensiert. Erfindungsgemäß wird somit die durch den Drallerzeuger durchgeführte Luftströmung nicht durch diesen behindert. Es resultieren somit optimierte bzw. verbesserte Strömungsverhältnisse, die zu einer verbesserten und ungestörten Zuführung von Luft bzw. von einem Luft-Treibstoff-Gemisch zur Brennkammer führen. Hierdurch kann der Verbrennungsvorgang selbst optimiert werden.

Erfindungsgemäß wird somit die Möglichkeit geschaffen, eine Systematik zur Gestaltung des Luftkanals und der Strömungsleitelemente vorzusehen, die eine systematische Auslegung im Hinblick auf einen möglichst gleichmäßigen Strömungswinkel (Drallverteilung) über die Höhe des Luftkanals erlaubt. Erfindungsgemäß kann dies in Abhängigkeit von der jeweiligen Profilform der Strömungsleitelemente erfolgen. Hierdurch ergeben sich eine bessere Vermischung von Kraftstoff und Luft sowie eine gleichmäßigere Verdrallung.

Die Erfindung ist sowohl für Ringbrennkammern als auch für Brennkammern mit nur einem Vormischbrenner anwendbar.

Im Folgenden wird die Erfindung anhand von Ausführungsbeispielen in Verbindung mit der Zeichnung beschrieben. Dabei zeigt:

Fig. 1     zeigt eine schematische Darstellung eines Gasturbinentriebwerks gemäß der vorliegenden Erfindung,

Fig. 2     eine Teil-Schnittansicht durch eine erfindungsgemäß zu verwendende Treibstoffdüse,

Fig. 3     eine stirnseitige Ansicht der in Fig. 2 gezeigten Treibstoffdüse,

Fig. 4     eine Definition der Kenngrößen eines Profils eines Strömungsleitelements,

Fig. 5     eine graphische Darstellung der Skelettlinienwinkel über die Sehnenlänge,

Fig. 6     eine schematische Darstellung der Dickenverteilung über die Sehnenlänge,

Fig. 7     Beispiele der sich erfindungsgemäß ergebenden Dickenverteilungen der Profile von Strömungsleitelementen,

Fig. 8     eine graphische Darstellung von Skelettlinienwinkelverteilungen,

Fig. 9     eine erfindungsgemäße Prinzipdarstellung der Kanalkonturierung, und

Fig. 10    eine graphische Darstellung erfindungsgemäßer Ausgestaltungen der inneren und äußeren Kanalwandung.

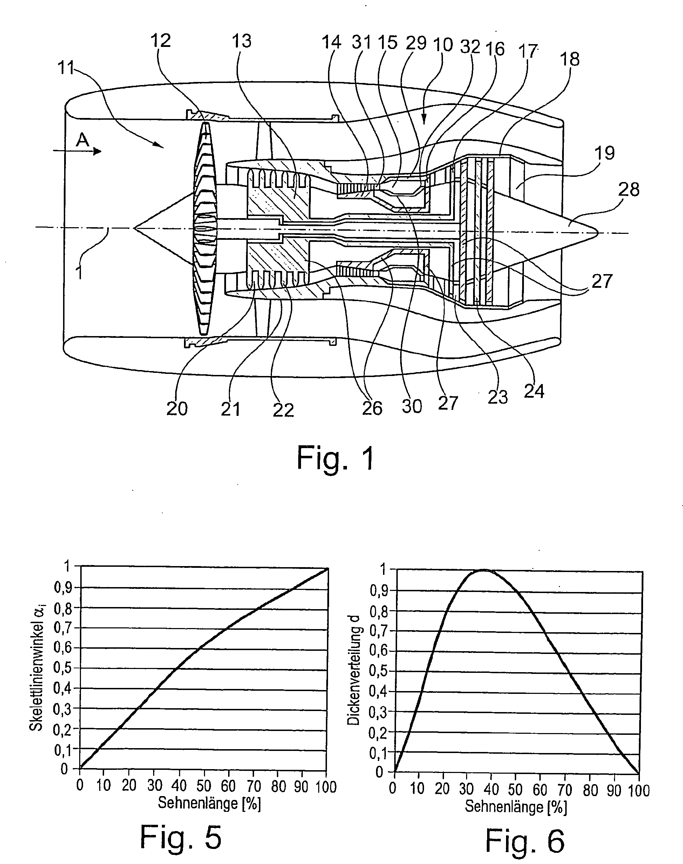

Das Gasturbinentriebwerk 10 gemäß Fig. 1 ist ein Beispiel, bei dem die Erfindung Anwendung finden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Mitteldruckkompressor 13, einen Hochdruckkompressor 14, eine Ringbrennkammer 15, eine Hochdruckturbine 16, eine Mitteldruckturbine 17 und eine Niederdruckturbine 18 sowie eine Abgasdüse 19, die sämtlich um eine zentrale Triebwerksachse 1 angeordnet sind. Das Bezugszeichen 28 zeigt einen Auslasskonus.

Der Mitteldruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1.

Aus dem Stand der Technik sind verschiedene Brennkammern, insbesondere Ringbrennkammern 15, mit unterschiedlichen Geometrien und Gestaltungsformen bekannt. Eine Ringbrennkammer 15 besteht aus einer oberen/radial äußeren 29 und einer unteren/radial inneren 30 Brennkammerwand, die zusammen einen ringförmigen Kanal bilden. Luft und Treibstoff werden der Ringbrennkammer 15 durch die Kraftstoffdüse 33 zugeführt, sowie außerdem Luft durch Kühl- bzw. Lufteinblasöffnungen an den Seitenwänden. In der Treibstoffdüse 33 bzw. in der Ringbrennkammer 15 werden Luft und Treibstoff vermischt und verbrannt. Die Luft und die Verbrennungsprodukte werden durch eine Brennkammeraustrittsdüse 32 in Richtung der Turbine 16 abgeleitet.

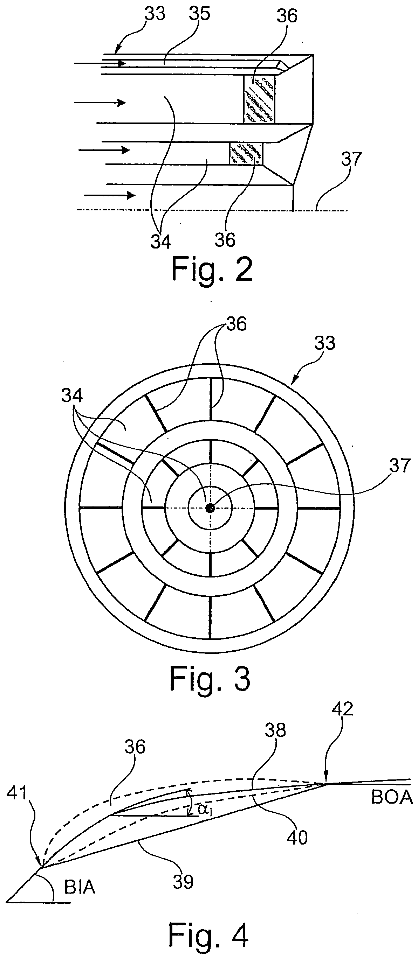

Die Vormischbrenner bzw. Kraftstoffdüsen 33 in Ringbrennkammern 15 von stationären Gasturbinen oder Fluggasturbinen zeichnen sich dadurch aus, dass die Luft und der Treibstoff gezielt geleitet und gemischt werden. Fig. 2 zeigt schematisch den Brenner/die Kraftstoffdüse für eine Ringbrennkammer 15. Luft und Treibstoff werden durch mehrere Kanäle 34 geführt, wobei die Luft mit Hilfe von Strömungsleitelementen 36 verdrallt wird, so dass Luft- und Treibstoff sich vermischen können. Die Anzahl der Luft- und Treibstoffkanäle 34 kann dabei beliebig sein.

Die Strömungsleitelemente 36 sind in die Luftkanäle 34 eingebettet, wobei die Form des Luftkanals gemäß dem Stand der Technik zylindrisch ist und seine Höhe sich über die Länge des Strömungsleitelementes nicht ändert. Das Strömungsleitelement selber dient dazu, der Luftströmung einen Drall aufzuprägen, der in der Größenordnung von 10 bis 50 Grad liegt. Dies geschieht durch eine aerodynamische Formgebung, die durch die radiale Aufstapelung von Profilschnitten der einzelnen Strömungsleitelemente erfolgt. Die Profilschnitte sind im Allgemeinen über die Kanalhöhe identisch und sowohl axial als auch in Umfangsrichtung linear, d.h. ohne axialen oder tangentialen Versatz, angeordnet.

Ein Profilschnitt eines Strömungsleitelements 36 lässt sich wie Folgt beschreiben: Ein Profil 40 eines Strömungsleitelements 36 ist die Überlagerung einer Skelettlinie 38 entlang einer Profilsehne 39 mit einer Dickenverteilung entlang der Profilsehne. Diese Definitionen erfolgen dimensionslos, um sie universell anwendbar zu machen. Dabei ist die Definition der Dickenverteilung dadurch gekennzeichnet, dass sie die Dicke entlang der Profilsehne 39 als Bruchteil der maximalen Dicke wiedergibt, siehe Fig. 5 und 6. Die Definition der Skelettlinie 38 ist derart, dass der lokale Winkel der Skelettlinie 38 in dimensionsloser Form definiert wird. Das erfolgt mit Gleichung 1 und zwar so, dass der jeweilige Wert $\alpha$ an einer Position I entlang der Profilsehne 38, die die Vorderkante 41 und die Hinterkante 42 des Profils 40 verbindet (siehe Fig. 4), aus dem dort tatsächlich vorliegenden Winkel der Skelettlinie $\alpha_i$ sowie der Neigung der Skelettlinie 38 an Vorderkante 41 bzw. an der Hinterkante 42 gegenüber der Horizontalen (BIA und BOA, siehe Fig. 4) gebildet wird.

$$\alpha(l) = \frac{\alpha_i(l) - BIA}{BOA - BIA} \qquad \text{(Gleichung 1)}$$

Im Rahmen der Erfindung ergeben sich zwei Dickenverteilungen, die mit einer Schar von Skelettlinienverteilungen kombiniert, ein jeweils erfindungsgemäßes Profil für das Strömungsleitelement 36 (Drallelement) ergeben.

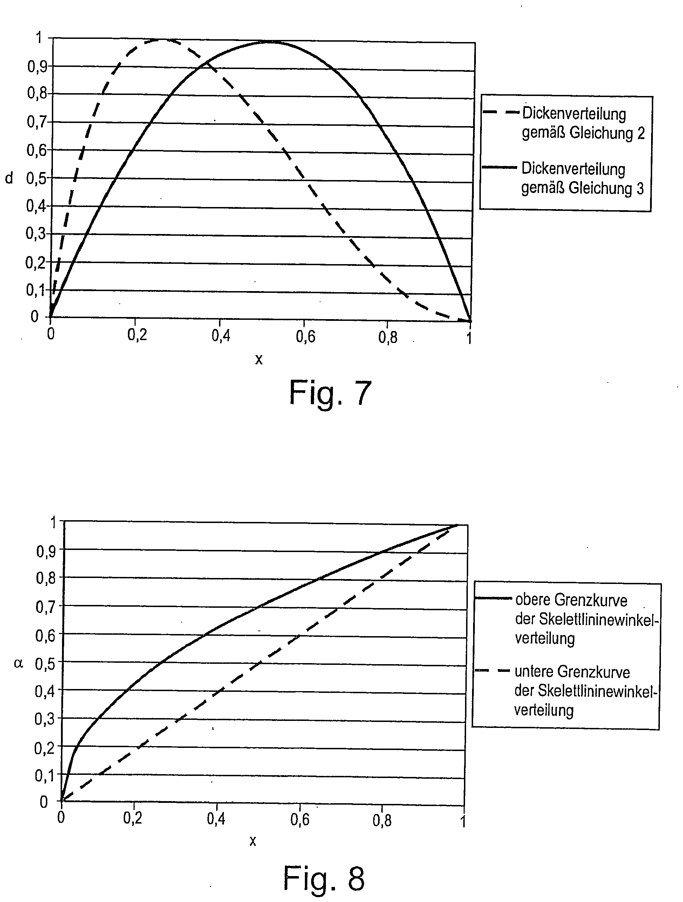

Die beiden Dickenverteilungen sind in Fig. 7 dargestellt und sind gemäß Gleichung 2 bzw. Gleichung 3 definiert. Die Darstellung erfolgt entlang der dimensionslosen Sehnenlänge eines beliebigen Profilschnitts. Die Definition beinhaltet dabei die Koordinate x, die von 0 bis 1 entlang der Sehne mit der dimensionslosen Länge 1 definiert ist, wobei 0 an der Vorderkante liegt und 1 an der Hinterkante (siehe Fig. 4).

$$d = 16 \cdot \left( \sqrt{x} - x \right)^2 \qquad \text{(Gleichung 2)}$$

$$d = 4 \cdot \left( x - x^2 \right) \qquad \text{(Gleichung 3)}$$

Die Schar der Skelettlinienwinkelverteilungen ist in Fig. 8 dargestellt. Jede Verteilung zwischen den beiden Grenzkurven ist dabei gültig, die Grenzkurven sind dabei durch Gleichungen 4 (untere) bzw. 5 (obere) definiert.

$$\alpha = x \qquad \text{(Gleichung 4)}$$

$$\alpha = \sqrt{x} \qquad \text{(Gleichung 5)}$$

Kombiniert ergeben sich dann entsprechende Profile. Die gezeigten Profile kombinieren die Dickenverteilung gemäß Gleichung 2 mit der Skelettlinienwinkelverteilung der unteren bzw. oberen Grenzkurve bei einem Eintrittswinkel BIA von 0 Grad und einem Austrittswinkel BOA von 45 Grad.

Eine solche Profilform wird nun erfindungsgemäß auf alle Profilschnitte entlang der Kanalhöhe angewendet, die Auffädelung kann beliebig in axialer und Umfangsrichtung erfolgen. Idealerweise wird die beschriebene Profilierung mit einer entsprechenden Kanalkontur kombiniert.

In Abhängigkeit von der Dickenverteilung wird erfindungsgemäß die Kanalkontur der radial inneren 43 und der radial äußeren 44 Kanalwand angepasst. Daher gibt es zu jeder der beiden erfindungsgemäßen Dickenverteilungen auch eine korrespondierende Kanalform.

Die erfindungsgemäße Lösung basiert darauf, dass die Strömungsleitelemente 36 (Drallelemente) durch ihre Anzahl und ihre Dicke den Kanalquerschnitt verengen. Diese Verengung wird erfindungsgemäß mit einer entsprechenden Kanalwandkonturierung verringert bzw. aufgehoben. Da die Verengung lokal durch den Verlauf der Dickenverteilung bestimmt wird, muss auch die Kanalkontur, d.h. die Form der inneren und äußeren Wand und die durch diese in Kombination mit der Profilverblockung entstehende durchströmbare Fläche angepasst werden. Die radiale Koordinate der inneren bzw. äußeren Kanalwand wird korrespondierend mit der Dickenverteilung entlang der Sehne angepasst und zwar so, dass ein gewünschter Flächenverlauf durch Variation des Kanalwandradius entlang der Sehne erzielt wird, wobei die Kanalwände stromab und an der Hinterkante sowie stromauf und an der Vorderkante nicht modifiziert werden.

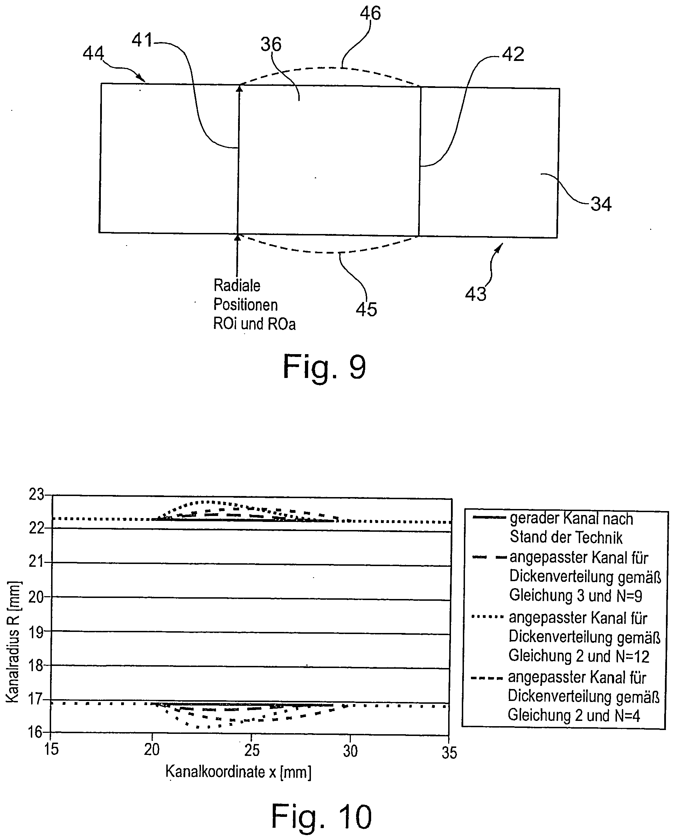

In Gleichung 6 und Gleichung 7 ist die Kanalform definiert. Dabei ergibt sich eine Gleichung für die radiale Koordinate der inneren Kanalwand Ri (Gleichung 6) und eine für die der äußeren Kanalwand Ra (Gleichung 7) entlang der Sehnenlänge. Als Parameter benötigt man den Faktor N, der eine beliebige Zahl zwischen 1 und der Anzahl der Strömungsleitelemente 36 (Drallelemente) annehmen kann, die Position x, die die Position entlang der Profilsehne beschreibt und zwischen 0 und 1 (Vorder- und Hinterkante) definiert ist, die Dicke d abgeleitet aus der Dickenverteilung an der Position x und die radiale Koordinate (Position) der inneren R0i bzw. äußeren Wand R0a an der Vorderkante, siehe dazu Fig. 9.

$$Ri = 0{,}5 \cdot N \cdot \frac{d}{\pi} + \sqrt{ (0{,}5 \cdot N \cdot \frac{d}{\pi})^2 - \left( \left( \left( \frac{R0i + R0a}{2} \right)^2 - R0i^2 \right) - \left( \frac{R0i + R0a}{2} \right)^2 + \frac{R0i + R0a}{2} \cdot N \cdot \frac{d}{\pi} \right) }$$

$$\text{(Gleichung 6)}$$

$$Ra = 0{,}5 \cdot N \cdot \frac{d}{\pi} + \sqrt{ (0{,}5 \cdot N \cdot \frac{d}{\pi})^2 + \left( \left( R0a^2 - \left( \frac{R0i + R0a}{2} \right)^2 \right) + \left( \frac{R0i + R0a}{2} \right)^2 - \frac{R0i + R0a}{2} \cdot N \cdot \frac{d}{\pi} \right) }$$

$$\text{(Gleichung 7)}$$

Die Fig. 10 zeigt beispielhafte Ausbildungen für die beiden Dickenverteilungen gemäß Gleichung 2 und 3 sowie für verschiedene Werte für N.

Die erfindungsgemäße Ausgestaltung des Vormischbrenners kann sowohl bei Ringbrennkammern als auch bei einzelnen Brennkammern verwendet werden. Weiterhin kann die Erfindung auch bei anderen Drallerzeugern in Strömungskanälen Anwendung finden.

Bezugszeichenliste:

| | |
|---|---|
| 1 | Triebwerksachse |
| 10 | Gasturbinentriebwerk |
| 11 | Lufteinlass |
| 12 | im Gehäuse umlaufender Fan |
| 13 | Mittelkompressor |
| 14 | Hochdruckkompressor |
| 15 | Brennkammern |
| 16 | Hochdruckturbine |
| 17 | Mitteldruckturbine |
| 18 | Niederdruckturbine |
| 19 | Abgasdüse |
| 20 | Leitschaufeln |
| 21 | Triebwerksgehäuse |
| 22 | Kompressorlaufschaufeln |
| 23 | Leitschaufeln |
| 24 | Turbinenschaufeln |
| 26 | Kompressortrommel oder -scheibe |
| 27 | Turbinenrotornabe |
| 28 | Auslasskonus |
| 29 | Radial äußere Brennkammerwand |
| 30 | Radial innere Brennkammerwand |
| 31 | Brennkammerkopf |
| 32 | Brennkammeraustrittsdüse |
| 33 | Treibstoffdüse |
| 34 | Luftkanal |
| 35 | Treibstoffkanal |
| 36 | Strömungsleitelement/Drallelement |
| 37 | Brennermittelachse |
| 38 | Skelettlinie |
| 39 | Profilsehne |
| 40 | Profil |
| 41 | Vorderkante |
| 42 | Hinterkante |
| 43 | Radial innere Kanalwandung |
| 44 | Radial äußere Kanalwandung |
| 45 | Konkave ringförmige Ausnehmung (radial innen) |
| 46 | Konkave ringförmige Ausnehmung (radial außen) |

**Patentansprüche**

**1.** Vormischbrenner für eine Brennkammer (15) einer Gasturbine, mit zumindest einem, eine radial äußere Kanalwandung (44) und eine radial innere Kanalwandung (43), bezogen auf eine Brennermittelachse (37), umfassenden ringförmigen Kanal (34) zur Zuführung von Luft und Treibstoff, sowie mit zumindest einem in dem Kanal (34) angeordneten Drallerzeuger, welcher um den Umfang des Kanalquerschnitts verteilt mehrere Strömungsleitelemente (36) umfasst, **dadurch gekennzeichnet, dass** zumindest die radial innere Kanalwandung (43) im Bereich der Strömungsleitelemente (36) mit einer konkaven, ringnutartigen Ausnehmung (45) versehen ist.

**2.** Vormischbrenner nach Anspruch 1, **dadurch gekennzeichnet, dass** die radial äußere Kanalwandung (44) im Bereich der Strömungsleitelemente (36) mit einer konkaven, ringnutartigen Ausnehmung (46) versehen ist.

3. Vormischbrenner nach Anspruch 1 oder 2, **dadurch gekennzeichnet, dass** die Querschnittsfläche der radial inneren (45) und/oder radial äußeren (46) Ausnehmung gleich oder kleiner als eine in der jeweilige Querschnittsebene senkrecht zu Brennerachse (37) bestimmten Querschnittsfläche der Strömungsleitelemente (36) ist.

4. Vormischbrenner nach einem der Ansprüche 1 bis 3, **dadurch gekennzeichnet, dass** jedes Strömungsleitelement (36) ein Strömungsprofil aufweist, welches zwischen einer anströmseitigen Vorderkante (41) und einer abströmseitigen Hinterkante (42) ausgebildet ist, wobei die Vorderkante (41) und die Hinterkante (42) jeweils auf einer senkrecht zur Brennerachse (37) angeordneten Querschnittsebene angeordnet sind und dass die ringnutartige Ausnehmung (45, 46) in axialer Richtung von der Ebene der Vorderkante (41) bis zur Ebene der Hinterkante (42) ausgebildet ist.

**Claims**

1. Premix burner for a combustion chamber (15) of a gas turbine, having at least one annular duct (34) which comprises a radially outer duct wall (44) and a radially inner duct wall (43) with respect to a burner central axis (37) and which serves for the feeding of air and fuel, and having at least one swirl generator which is arranged in the duct (34) and which comprises, distributed around the circumference of the duct cross section, multiple flow-guiding elements (36), **characterized in that** at least the radially inner duct wall (43) is provided in the region of the flow-guiding elements (36) with a concave, annular groove-like recess (45).

2. Premix burner according to Claim 1, **characterized in that** the radially outer duct wall (44) is provided in the region of the flow-guiding elements (36) with a concave, annular groove-like recess (46).

3. Premix burner according to Claim 1 or 2, **characterized in that** the cross-sectional area of the radially inner (45) and/or radially outer (46) recess is equal to or less than a cross-sectional area of the flow-guiding elements (36) that is determined in the respective cross-sectional plane perpendicular to the burner axis (37).

4. Premix burner according to one of Claims 1 to 3, **characterized in that** each flow-guiding element (36) has a flow profile which is formed between a flow-on-side front edge (41) and a flow-off-side rear edge (42), wherein the front edge (41) and the rear edge (42) are each arranged on a cross-sectional plane which is arranged perpendicular to the burner axis (37), and **in that** the annular groove-like recess (45, 46) is formed from the plane of the front edge (41) to the plane of the rear edge (42) in an axial direction.

**Revendications**

1. Brûleur à prémélange pour une chambre de combustion (15) d'une turbine à gaz, comprenant au moins un canal de forme annulaire (34) pour l'alimentation en air et en combustible, comprenant une paroi de canal radialement extérieure (44) et une paroi de canal radialement intérieure (43), par rapport à un axe médian de brûleur (37), et comprenant au moins un générateur de tourbillon disposé dans le canal (34), qui comprend plusieurs éléments guidant l'écoulement (36) répartis sur la périphérie de la section transversale du canal, **caractérisé en ce qu'**au moins la paroi de canal radialement intérieure (43) est pourvue dans la région des éléments guidant l'écoulement (36) d'un évidement concave de type rainure annulaire (45).

2. Brûleur à prémélange selon la revendication 1, **caractérisé en ce que** la paroi de canal radialement extérieure (44) est pourvue, dans la région des éléments guidant l'écoulement (36), d'un évidement concave de type rainure annulaire (46).

3. Brûleur à prémélange selon la revendication 1 ou 2, **caractérisé en ce que** la surface en section transversale de l'évidement radialement intérieur (45) et/ou radialement extérieur (46) est inférieure ou égale à une surface en section transversale des éléments guidant l'écoulement (36) déterminée dans le plan en section transversal respectif perpendiculairement à l'axe de brûleur (37).

4. Brûleur à prémélange selon l'une quelconque des revendications 1 à 3, **caractérisé en ce que** chaque élément guidant l'écoulement (36) présente un profil d'écoulement qui est réalisé entre une arête avant (41) côté afflux et une arête arrière côté sortie (42), l'arête avant (41) et l'arête arrière (42) étant chacune disposées sur un plan en section transversale disposé perpendiculairement à l'axe de brûleur (37) et **en ce que** l'évidement de type rainure annulaire (45, 46) est réalisé dans la région axiale depuis le plan de l'arête avant (41) jusqu'au plan de l'arête arrière (42).

Fig. 1

Fig. 5

Fig. 6

Fig. 2

Fig. 3

Fig. 4

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010019772